# EUROPEAN PATENT APPLICATION

(11) **EP 4 847 701 A1**
(43) Date of publication of application: **02.12.2026**
(21) Application number: 25852347.1
(22) Date of filing: 20.03.2025
(51) Int. Cl.: E02F 9/24, E02F 9/26, E02F 9/20, H04N 7/18, G06V 20/52, G06V 10/82, G06N 3/08, G06F 3/0484, G06F 3/0481

(54) **CONSTRUCTION EQUIPMENT SAFETY SYSTEM AND METHOD FOR SETTING RISK OF OBJECT BY USING CONSTRUCTION EQUIPMENT SAFETY SYSTEM**

(30) Priority: 07.08.2024 KR 20240105499
(71) Applicant: Hyundai M Systems Corporation, Suwon-si, Gyeonggi-do 16681 (KR)
(72) Inventor: KIM, Yongjin, Seoul 07982 (KR); LEE, Seungho, Yongin-si, Gyeonggi-do 16839 (KR)
(74) Representative: Isarpatent
(86) International application number: PCT/KR2025/095035
(87) International publication number: WO 2026/035123

(57) **Abstract**

The present disclosure relates to a construction equipment safety system configured to allow a worker inside construction equipment to select whether to release a risk with respect to a safety device disposed at a construction site, and to a method of setting a risk level of an object using the construction equipment safety system, wherein a construction equipment safety system according to an embodiment of the present disclosure may comprise: a sensing unit provided in construction equipment and configured to sense a predetermined area around the construction equipment; a control unit configured to receive a sensing result from the sensing unit and to detect an object present in the predetermined area; and an interface unit configured to receive information on the object detected by the control unit and to warn a worker aboard the construction equipment of a collision risk.

## Description

### TECHNICAL FIELD

The present disclosure relates to a construction equipment safety system configured to allow a worker inside construction equipment to select whether to release a risk with respect to a safety device disposed at a construction site, and to a method of setting a risk level of an object using the construction equipment safety system.

### BACKGROUND OF THE INVENTION

With the recent rapid development of artificial intelligence, artificial intelligence technology is being applied to various fields, and in the field of construction equipment as well, a safety system capable of recognizing and distinguishing a worker (a person) around the construction equipment from other, non-human objects by analyzing a camera image through artificial intelligence has been introduced.

Meanwhile, when performing work at a construction site, concentration tends to decrease due to the loud noise inherent to the nature of the site, and a worker (an operator) performing work inside the construction equipment also has a limited field of view because of the various work tools connected to the construction equipment, so that in reality it is difficult to perceive all the dangerous situations at the site.

To solve this problem, various kinds of safety devices are disposed and installed at a construction site. As one example of such a safety device, a signaler may be disposed at the construction site. The signaler serves to instruct the operation and work of the construction equipment through communication with the operator of the construction equipment, and to identify a danger signal so as to enable an immediate response. As another example of the safety device, a safety fence may be installed at the construction site. The safety fence mainly serves as a screen, and serves to prevent workers from entering a dangerous area or to designate a safe movement path. As still another example of the safety device, a traffic cone may be installed at the construction site. The traffic cone serves as a traffic safety facility that is installed in a traffic section of the construction site to control vehicles at the site.

As such, when work is performed using a safety system employing artificial intelligence at a construction site where various types of safety devices are disposed, the safety system recognizes the safety devices as objects as well, so that a warning sounds. When a safety device is disposed adjacent to the construction equipment that is working, a warning sounding continuously may cause inconvenience to the operator.

In addition, it is highly likely that the operator is aware of the positions not only of the safety fence and the traffic cone that are disposed at the same positions, but also of the signaler who continuously communicates with the operator. Nevertheless, when a continuous warning notification sounds, the operator cannot endure the increasing fatigue and eventually turns off the safety system itself while working. This may make it impossible to identify an object that actually poses a collision risk, thereby leading to a safety accident.

### SUMMARY OF THE INVENTION

### TECHNICAL PROBLEM

An object of an embodiment of the present disclosure is to set a warning notifying of a collision risk not to be displayed, according to a worker's selection, for a safety device that, among various objects detected at a construction site, has a low collision risk with the construction equipment because the worker knows its position.

An object of an embodiment of the present disclosure is to enable a risk-released state to be maintained for a safety device for which a risk has been released, without the need to repeatedly select risk release.

However, the problems to be solved by the present disclosure are not limited to the aforementioned problems, and other unmentioned problems will be clearly understood based on the following description.

### TECHNICAL SOLUTION

According to an embodiment of the present disclosure, a construction equipment safety system may comprise: a sensing unit provided in construction equipment and configured to sense a predetermined area around the construction equipment; a control unit configured to receive a sensing result from the sensing unit and to detect an object present in the predetermined area; and an interface unit configured to receive information on the object detected by the control unit and to warn a worker aboard the construction equipment of a collision risk.

Alternatively, the control unit may determine whether the detected object is a safety device that is provided at a construction site so that the construction equipment works safely, and, when the detected object is the safety device, may inquire of the worker, through the interface unit, whether to release a risk with respect to the safety device.

Alternatively, the safety device may comprise at least one of a signaler that controls operation of the construction equipment, a safety fence, or a traffic cone.

Alternatively, the control unit may comprise a processor that executes a pre-trained artificial intelligence neural network to detect the object present in the predetermined area.

Alternatively, the control unit may control the interface unit to output a pop-up message to inquire whether to release the risk, and the pop-up message may differ depending on a type of the safety device.

Alternatively, the control unit may receive, through the interface unit, a user input that sets whether to release the risk of the detected safety device.

Alternatively, the control unit, upon receiving a user input approving release of the risk of the detected safety device, may turn off a collision risk warning with respect to the safety device.

Alternatively, the control unit, when the detected object is the safety device, may determine whether the detected object is a safety device for which risk release has been previously set.

Alternatively, the control unit, when it is determined that the detected object is a safety device for which risk release has been previously set, may immediately turn off a collision risk warning with respect to the safety device without inquiring whether to release the risk.

According to an embodiment of the present disclosure, a method of setting a risk level of an object detected in a predetermined area around construction equipment at a construction site may comprise: detecting an object present in the predetermined area; and determining whether the detected object is a safety device that is provided at the construction site so that the construction equipment works safely, and setting a risk level for the safety device.

Alternatively, the setting of the risk level may comprise inquiring of a worker, through an interface unit provided in the construction equipment, whether to release a risk with respect to the safety device.

Alternatively, the detecting of the object may comprise executing a pre-trained artificial intelligence neural network to detect the object present in the predetermined area.

Alternatively, the setting of the risk level may comprise, upon receiving through the interface unit a user input approving release of the risk of the detected safety device, turning off a collision risk warning with respect to the safety device.

Alternatively, the setting of the risk level may comprise, when the detected object is the safety device, determining whether the detected object is a safety device for which risk release has been previously set.

Alternatively, the setting of the risk level may comprise, when it is determined that the detected object is a safety device for which risk release has been previously set, immediately turning off a collision risk warning with respect to the safety device without inquiring whether to release the risk.

### ADVANTAGEOUS EFFECTS

According to an embodiment of the present disclosure, by inquiring of a worker, through the interface unit, whether to release a risk with respect to a safety device detected at a construction site, and, simultaneously with receiving from the worker an input for setting the release of the risk, setting a warning for the safety device not to be displayed, it is possible to prevent a warning from continuously sounding for a safety device that has a low collision risk because the worker already knows its position, and work efficiency can be improved.

According to an embodiment of the present disclosure, by being configured to determine whether a detected safety device is a safety device for which a risk has been previously released, a risk-released state is maintained for a safety device for which a risk has been released, without the need to repeatedly select risk release, and the convenience of a worker can be improved.

### BRIEF DESCRIPTION OF THE DRAWINGS

FIG. 1 is a block diagram of a construction equipment safety system according to an embodiment of the present disclosure.
FIG. 2 is a diagram for explaining various objects that can be detected at a construction site, in an embodiment of the present disclosure.
FIGS. 3a through 3c are diagrams for explaining an example in which a pop-up message inquiring whether to release a risk is displayed through the interface unit, in an embodiment of the present disclosure.
FIG. 4 is a flowchart showing a flow of a method according to an embodiment of the present disclosure.
FIG. 5 is a flowchart showing a detailed flow of setting a risk level, in a method according to an embodiment of the present disclosure.
FIG. 6 is a flowchart showing a detailed flow of determining whether a recognized safety device is a safety device for which a risk has been released, in a method according to an embodiment of the present disclosure.

### DETAILED DESCRIPTION OF THE EMBODIMENTS

Hereinafter, embodiments of the present disclosure will be described in detail with reference to the accompanying drawings so that a person of ordinary skill in the art to which the present disclosure pertains can easily implement the same. The embodiments presented in the present disclosure are provided to enable a person of ordinary skill in the art to use or implement the content of the present disclosure. Accordingly, various modifications to the embodiments of the present disclosure will be apparent to a person of ordinary skill in the art. That is, the present disclosure may be embodied in many different forms and is not to be construed as limited to the embodiments set forth herein.

Throughout the specification of the present disclosure, the same or similar reference numerals refer to the same or similar components. Furthermore, for clarity of description of the present disclosure, reference numerals for parts unrelated to the description of the present disclosure in the drawings may be omitted.

The term "or" as used in the present disclosure is intended to mean an inclusive "or" rather than an exclusive "or". That is, unless otherwise specified or clear from the context, "X uses A or B" is to be understood to mean any of the natural inclusive permutations. For example, if "X uses A or B" is used in the present disclosure, unless otherwise specified or clear from the context, it may be interpreted as any of the cases where X uses A, X uses B, or X uses both A and B.

The term "at least one of A or B" as used in the present disclosure is to be interpreted as referring to all of A, B, and a combination of A and B.

The term "and/or" as used in the present disclosure is to be understood to refer to and include all possible combinations of one or more of the associated listed concepts.

The terms "comprises" and/or "comprising" as used in the present disclosure are to be understood to mean the presence of a specific feature and/or component. However, the terms "comprises" and/or "comprising" are to be understood as not precluding the presence or addition of one or more other features, other components, and/or combinations thereof.

In the present disclosure, unless otherwise specified, or unless it is clear from the context that a singular form is intended, generally the singular is to be interpreted to include "one or more".

The term "N-th (where N is a natural number)" as used in the present disclosure may be understood as an expression used to distinguish components of the present disclosure from each other according to a certain standard, such as a functional perspective, a structural perspective, or for convenience of explanation. For example, in the present disclosure, components that perform different functional roles may be distinguished as a first component or a second component. However, components that are substantially the same within the technical spirit of the present disclosure but need to be distinguished for convenience of explanation may also be distinguished as a first component or a second component.

The term "connection" as used in the present disclosure is to be interpreted as including not only a case where components are "directly connected," but also a case where another component "exists" therebetween, and a case where the components are "electrically connected" with another component interposed therebetween.

Meanwhile, the term "module" or "unit" as used in the present disclosure may be understood as a term referring to an independent functional unit that processes computing resources, such as a computer-related entity, firmware, software, or a portion thereof, hardware or a portion thereof, or a combination of software and hardware. A "module" or a "unit" may be a unit configured as a single element, or a unit expressed as a combination or a set of a plurality of elements. For example, in a narrow sense, a "module" or a "unit" may refer to a hardware element of a computing device or a set thereof, an application program that performs a specific function of software, a processing procedure implemented through software execution, or a set of instructions for program execution. Furthermore, in a broad sense, a "module" or a "unit" may refer to a computing device itself that constitutes a system, or an application executed on the computing device. However, the above-mentioned concepts are only examples, and the concepts of "module" or "unit" may be variously defined within the scope understandable by a person of ordinary skill in the art based on the content of the present disclosure.

The term "model" as used in the present disclosure may be understood as a system implemented using mathematical concepts and language to solve a specific problem, a set of software units for solving a specific problem, or an abstraction for a processing procedure for solving a specific problem. For example, a neural network "model" may refer to an entire system implemented as a neural network that has a problem-solving ability through learning. The neural network may have problem-solving ability by optimizing parameters that connect nodes or neurons through learning. A neural network "model" may include a single neural network or a set of neural networks in which a plurality of neural networks are combined.

In addition, the artificial intelligence neural network referred to in the present disclosure may be a neural network trained through a supervised learning scheme. Supervised learning is a method of machine learning for deriving a function from training data. Among the functions derived in this way, one that outputs a continuous value may be referred to as regression, and one that predicts and outputs a class of an input vector may be referred to as classification. In supervised learning, an artificial neural network is trained in a state in which a label for the training data is given. The label may mean a correct answer (or a result value) that the artificial neural network should infer when the training data is input to the artificial neural network. The correct answer that the artificial neural network should infer when the training data is input may be referred to as a label or labeling data, and setting a label on the training data for training the artificial neural network may be referred to as labeling. In this case, the training data and the label corresponding to the training data constitute one training set, and may be input to the artificial neural network in the form of a training set. Meanwhile, the training data represents a plurality of features, and labeling a label on the training data may mean that a label is attached to a feature that the training data represents. In this case, the training data may represent a feature of an input object in the form of a vector. The artificial neural network may derive, using the training data and the labeling data, a function for a correlation between the training data and the labeling data. Then, a parameter of the artificial neural network may be determined (optimized) through evaluation of the function derived by the artificial neural network. As an index for evaluating the derived function, a loss function may be used. The loss function is a score value generated by receiving a correct answer and a prediction as inputs, and serves as an index for determining how well the neural network has predicted with respect to the correct answer. A smaller value of such a loss function means that the prediction accuracy of the artificial neural network is higher. The loss function may be appropriately selected depending on a specific problem or data set, and, for example, in the case of a convolutional neural network model, a cross-entropy loss, a mean squared error loss, or the like may be used as the loss function.

The "data" as used in the present disclosure may include an "image," a signal, and the like. The term "image" as used in the present disclosure may refer to multi-dimensional data composed of discrete image elements. In other words, "image" may be understood as a term referring to a digital representation of an object that can be seen by the human eye. For example, "image" may refer to multi-dimensional data composed of elements corresponding to pixels in a two-dimensional image. "Image" may refer to multi-dimensional data composed of elements corresponding to voxels in a three-dimensional image.

The foregoing description of the terms is for the purpose of aiding the understanding of the present disclosure. Therefore, it is to be noted that if the foregoing terms are not explicitly stated as limiting the content of the present disclosure, they are not used in a sense that limits the technical spirit of the content of the present disclosure.

Hereinafter, an embodiment of the present disclosure is described in detail with reference to the accompanying drawings.

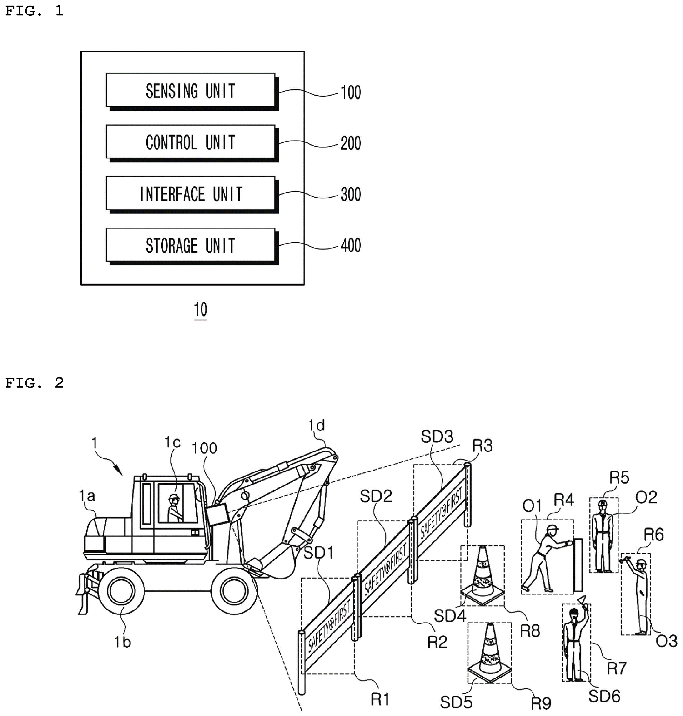

FIG. 1 is a block diagram of a construction equipment safety system according to an embodiment of the present disclosure, and FIG. 2 is a diagram for explaining various objects that can be detected at a construction site, in an embodiment of the present disclosure.

First, referring to FIG. 1, a construction equipment safety system 10 according to an embodiment of the present disclosure may include a sensing unit 100, a control unit 200, and an interface unit 300.

The sensing unit 100 is a component that is provided in the construction equipment 1 and monitors a predetermined area around the construction equipment 1 to sense an object that is at risk of colliding with the construction equipment 1 during work of the construction equipment 1.

The sensing unit 100 may be, for example, a camera provided to capture, in real time, predetermined areas in front of, behind, and on both sides of the construction equipment 1. A video image captured in real time by the sensing unit 100 is transmitted to the control unit 200 described later, and the control unit 200 may recognize an object included in the video image.

Meanwhile, the construction equipment 1 in which the safety system 10 according to an embodiment of the present disclosure is to be provided may include a lower traveling body 1a and an upper rotating body 1b that is disposed above the lower traveling body 1a and rotates 360 degrees. The upper rotating body 1b may be provided with a cab 1c so that a worker (an operator) who operates the construction equipment 1 boards therein, and a bucket and a bucket arm 1d, which are work tools, may be disposed in front of the cab 1c (see FIG. 2).

In this case, due to the structure in which the bucket and the bucket arm 1d are disposed in front of the cab 1c, the field of view of the worker who performs operation and work inside the cab 1c may be limited. Therefore, in order to assist the worker's line of sight, a monitor may be installed inside the cab 1c so that the video image captured by the sensing unit 100 is displayed in real time.

The control unit 200 is a component that receives a sensing result from the sensing unit 100 and detects an object present in a predetermined area around the construction equipment 1.

The control unit 200 may control the overall operation of the construction equipment safety system 10 of the present disclosure. The control unit 200 may include any type of device capable of processing data, such as a processor. The 'processor' may mean, for example, a data processing device embedded in hardware and having a physically structured circuit for performing a function expressed by code or an instruction included in a program. As an example of the data processing device embedded in hardware as described above, processing devices such as a microprocessor, a central processing unit (CPU), a processor core, a multiprocessor, an application-specific integrated circuit (ASIC), a field programmable gate array (FPGA), a graphics processing unit (GPU), and a neural processing unit (NPU) may be encompassed, but the scope of the present disclosure is not limited thereto.

The processor included in the control unit 200 may execute a pre-trained artificial intelligence neural network for various types of objects. As an example, the neural network may be based on a convolutional neural network (CNN) model trained to detect an object from an image obtained by capturing a predetermined area around the construction equipment. More specifically, the neural network may be any one of YOLO (You Only Look Once), SSD (Single Shot MultiBox Detector), Faster R-CNN, or Mask R-CNN.

The control unit 200 may determine whether the object detected by the neural network is a safety device. The safety device may include at least one of a signaler that controls operation of the construction equipment, a safety fence, or a traffic cone.

To enable the control unit 200 to determine whether an object is a safety device, the neural network may be one that has been pre-trained by labeling training images with both a type of an object and whether the object is a safety device.

For example, a person wearing a white safety helmet (or a white vest) may be labeled as a general worker, and a person wearing a red safety helmet (or a red vest) may be labeled as a worker who is a signaler; and the general worker may be labeled as a non-safety device, while the signaler may be labeled as a safety device. For example, the safety fence and the traffic cone may be labeled as a safety fence and a traffic cone, respectively, while both may at the same time be labeled as a safety device.

As another example, the neural network may be one that has been pre-trained by labeling training images with a type of an object, and a process may be additionally performed in which the control unit 200 determines, with respect to result data obtained by predicting the type of the object, whether the object is a safety device according to the type of the object (e.g., a signaler, a general worker, a traffic cone, a safety fence).

Meanwhile, an object detection algorithm that extracts features from a video image using a pre-trained neural network and classifies an object based thereon is well known in the art, and thus a detailed description of the algorithm is omitted.

Referring to FIG. 2, a plurality of objects may be detected in an area captured by the sensing unit 100. In detection areas R1, R2, and R3, safety fences SD1, SD2, and SD3 may be detected. In detection areas R8 and R9, traffic cones SD4 and SD5 may be detected. In detection areas R4, R5, and R6, workers O1, O2, and O3 who are not signalers may be detected. In a detection area R7, a signaler SD6 may be detected. Among the objects detected in this way, the control unit 200 may determine the safety fences, the traffic cones, and the signaler (SD1 through SD6) as safety devices.

Meanwhile, the construction equipment safety system 10 according to an embodiment of the present disclosure may further include a storage unit 400.

The storage unit 400 may include magnetic storage media or flash storage media, but the scope of the present disclosure is not limited thereto. The storage unit 400 may include a built-in memory and/or an external memory, and may include a volatile memory such as a DRAM, an SRAM, or an SDRAM; a non-volatile memory such as a one time programmable ROM (OTPROM), a PROM, an EPROM, an EEPROM, a mask ROM, a flash ROM, a NAND flash memory, or a NOR flash memory; a flash drive such as an SSD, a compact flash (CF) card, an SD card, a Micro-SD card, a Mini-SD card, an Xd card, or a memory stick; or a storage device such as an HDD.

The storage unit 400 may include the aforementioned pre-trained neural network. When the release of the risk of a safety device is approved, a record thereof may be stored in the storage unit 400.

The interface unit 300 is a component that receives information on the object detected by the control unit 200 and warns a worker (an operator) aboard the construction equipment 1 of a collision risk. The interface unit 300 may be configured on the monitor installed inside the aforementioned cab 1c.

The interface unit 300 may include a display unit as a means for visually providing various types of work-related information to the operator. The display unit may be formed of any one of a light emitting diode (LED), a liquid crystal display (LCD), a plasma display panel (PDP), or an organic light emitting diode (OLED). However, this is merely an example, and the display unit may be configured with an element not mentioned.

The visual information provided through the display unit may include a video image containing an object detection result.

The interface unit 300 may include an input unit for receiving a user input. The input unit generates key input data that the operator inputs. To this end, the input unit may be configured with a key pad, a dome switch, a touch pad (resistive/capacitive), or the like. In particular, when the touch pad forms a mutual layer structure with the aforementioned display unit, it may be referred to as a touch screen.

When the control unit 200 determines that the detected object is a safety device, the control unit 200 may inquire of the operator, through the interface unit 300, whether to release a risk with respect to the safety device.

More specifically, the control unit 200 may control the interface unit 300 to output a pop-up message so as to inquire whether to release the risk.

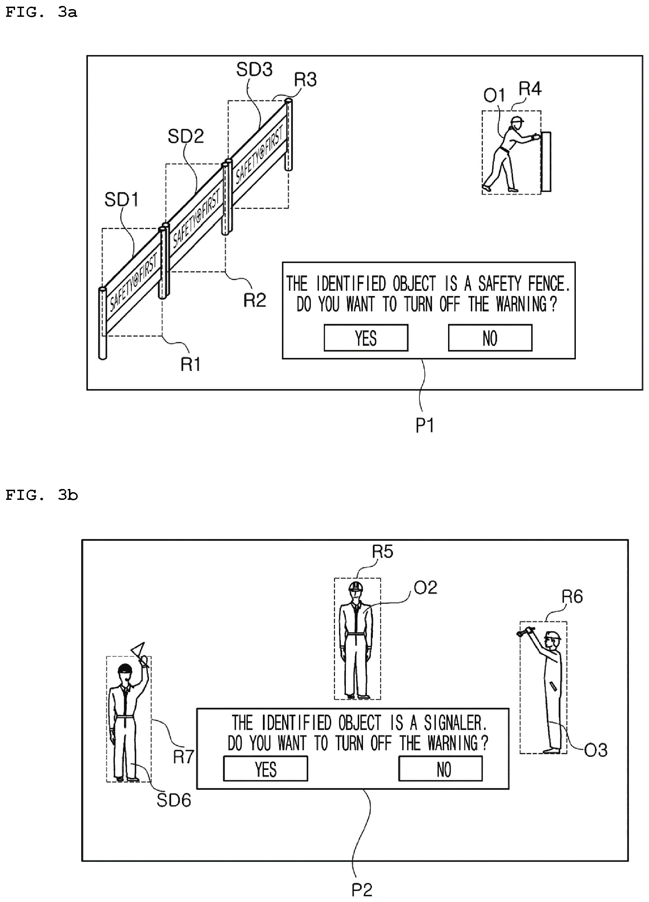

FIGS. 3a through 3c are diagrams for explaining an example in which a pop-up message inquiring whether to release a risk is displayed through the interface unit, in an embodiment of the present disclosure.

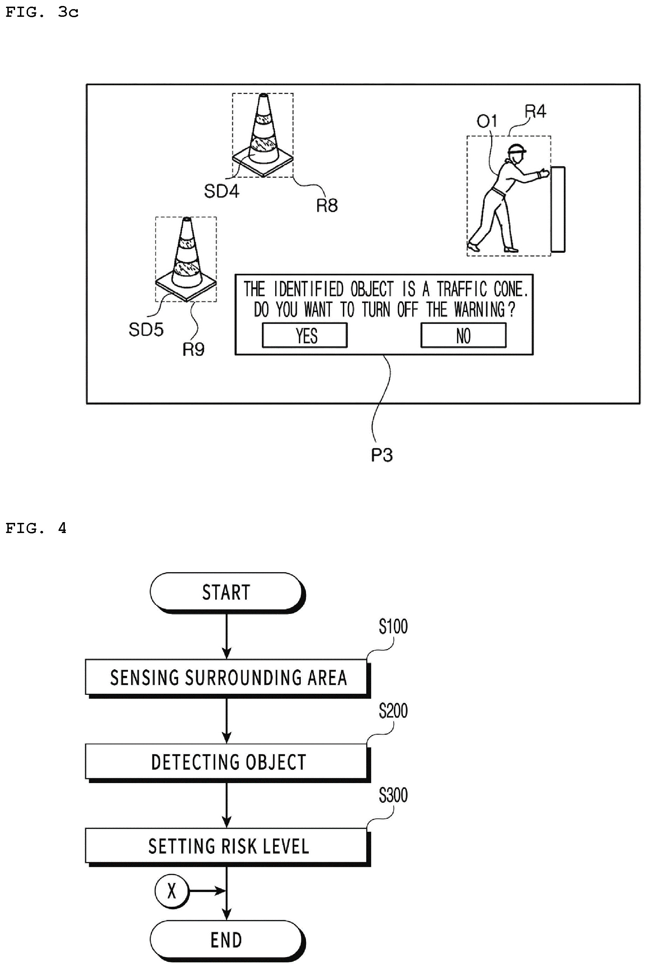

The pop-up message may be configured differently depending on a type of the safety device. For example, when a safety fence is detected, a pop-up message P1 stating "The identified object is a safety fence. Do you want to turn off the warning?" may be output through the display unit (see FIG. 3a). For example, when a signaler is detected, a pop-up message P2 stating "The identified object is a signaler. Do you want to turn off the warning?" may be output through the display unit (see FIG. 3b). For example, when a traffic cone is detected, a pop-up message P3 stating "The identified object is a traffic cone. Do you want to turn off the warning?" may be output through the display unit (see FIG. 3c). As a possible embodiment, as for the content of the pop-up message, a plurality of message samples may be stored in the storage unit 400, and the operator may select and set one from among them.

The control unit 200 may receive, through the interface unit 300, a user input that sets whether to release the risk of the detected object. More specifically, referring to FIGS. 3a through 3c, the pop-up messages P1 through P3 may include a GUI component instructing approval (Yes)/rejection (No) of whether to release the risk.

When the control unit 200 receives a user input approving the release of the risk of the detected object, the control unit 200 may turn off a collision risk warning with respect to the corresponding object. Taking the examples shown in FIGS. 3a through 3c, the operator may click the 'Yes' button of the pop-up message to make an input approving the release of the risk with respect to the safety device.

In this way, by inquiring whether to release the risk with respect to the safety device through the pop-up message, the operator can intuitively understand the risk release setting, and can release the risk with respect to the safety device merely by performing a simple instruction action even during work.

Until an input approving the release of the risk is made, a collision risk warning may be output also for the corresponding safety device. The collision risk warning may be output, for example, in the form of a warning sound, a warning message, or the like through a speaker provided inside the cab 1c. Preferably, the collision risk warning may be output when a distance between the construction equipment 1 and an object detected within an area sensed by the sensing unit 100 becomes equal to or less than a threshold value.

Simultaneously with receiving the input approving the release of the risk, the control unit 200 may control the speaker to turn off the collision risk warning with respect to the corresponding safety device. In this case, the control unit 200 may control the speaker so that the collision risk warning is turned off for the corresponding safety device regardless of the distance from the construction equipment 1. For example, referring to FIG. 3a, when the risk with respect to the safety fences SD1, SD2, and SD3 has been released, the collision risk warning is not output even if the distance between the safety fences SD1, SD2, and SD3 and the construction equipment 1 becomes equal to or less than the threshold value. In contrast, for the worker O1, the collision risk warning is output as soon as the distance from the construction equipment 1 becomes equal to or less than the threshold value.

Through such a configuration, it is possible to prevent a warning from continuously sounding for a safety device that has a low collision risk because the operator already knows its position, and work efficiency can be improved. In addition, since it can be set, according to the operator's selection, to receive a collision risk warning even for a safety device, the risk level setting can be changed according to the operator's disposition, skill level, and the situation of the work site (such as weather and complexity), and there is an advantage that the flexibility of the system is increased.

In addition to the examples shown in FIGS. 3a through 3c, other embodiments of inquiring about and approving whether to release a risk may also be included in the technical scope of the present disclosure. For example, instead of displaying a component indicated as Yes/No and receiving a user input therethrough, the operator may directly click a detection area to set the release of the risk for a safety device detected in the corresponding detection area.

Meanwhile, when the detected object is a safety device, the control unit 200 may determine whether the detected object is a safety device for which risk release has been previously set.

When it is determined that the detected object is a safety device for which risk release has been previously set, the control unit 200 may immediately turn off a collision risk warning with respect to the corresponding safety device without inquiring whether to release the risk.

As an example, whether it is a safety device for which risk release has been previously set may be determined based on whether the detected safety device is an object of the same kind as a safety device for which risk release has been previously set.

As an example, whether it is a safety device for which risk release has been previously set may be determined by considering together whether the detected safety device is an object of the same kind as a safety device for which risk release has been previously set, and whether a difference obtained by comparing a detection time of the safety device for which the risk was previously released with a detection time of the currently detected safety device is smaller than a preset difference value.

Specifically, when a safety device is detected but there is no previous risk release record for an object of the same kind, a time stamp t1_1 may be set for the safety device for the first time. The time stamp referred to in the present disclosure may be set for a detected time. Thereafter, when the operator releases the risk with respect to the corresponding safety device, the release of the risk with respect to the corresponding safety device may be recorded in the storage unit 400 together with the time stamp t1_1.

When a safety device for which a risk release record exists is detected again, the re-detected time t1_2 is compared with the existing time stamp t1_1, and if the time difference is smaller than the preset difference value, the re-detected safety device is determined to be the same safety device as the previously set safety device, and for the corresponding safety device, a collision risk warning may be immediately turned off without inquiring whether to release the risk through a pop-up message. The time stamp t1_1 may be initialized. The initialization of the time stamp t1_1 may mean resetting the time stamp to the time t1_2 at which the safety device is later detected. The risk release record for the re-detected safety device may be recorded in the storage unit 400 together with the reset time stamp t1_2.

Meanwhile, when the time difference is equal to or greater than the preset difference value, the re-detected safety device is determined to be a safety device that is not the same as the previously set safety device, and for the corresponding safety device, whether to release the risk may be inquired again through a pop-up message. At the same time, a time stamp t2_1 may be set for the first time for the time at which the corresponding safety device is detected. Thereafter, whether to release the risk with respect to the detected safety device may be inquired of the worker through the interface unit 300.

Among the safety devices, the signaler may briefly disappear from and then reappear on a screen of a predetermined area captured by the camera. Alternatively, as the upper rotating body 1b rotates, a safety fence or a traffic cone that does not move at the same place may disappear from and then reappear on the screen. The control unit 200 outputs a pop-up message together with object detection to inquire again whether to release the risk. However, if the time until the safety device reappears is very short, continuously inquiring about whether to release the risk may lower work efficiency.

According to the present disclosure, for a safety device of the same kind, the convenience of a worker can be improved by releasing a collision risk warning without inquiring whether to release the risk.

In addition, when a safety device of the same kind is detected again after a certain period of time has elapsed, there is an advantage that the operator's attention can be aroused again by inquiring again whether to release the risk.

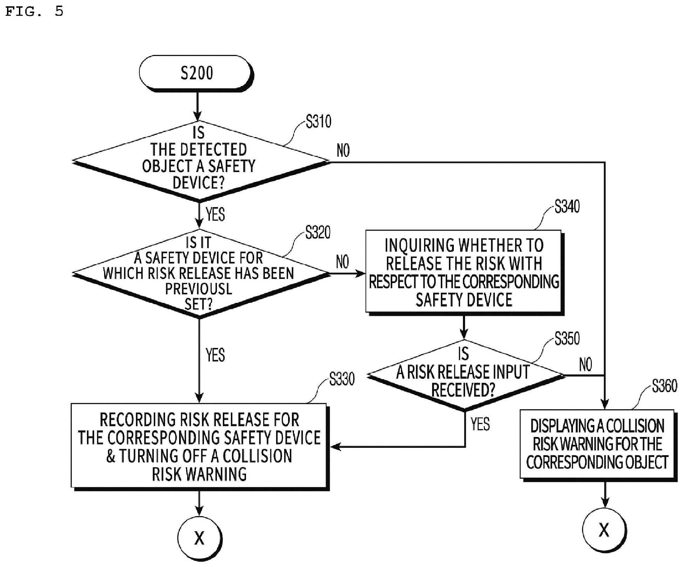

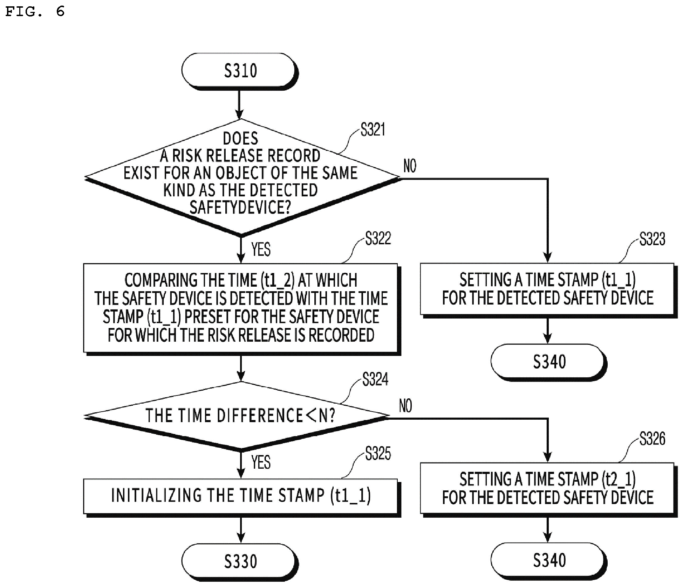

FIG. 4 is a flowchart showing a flow of a method according to an embodiment of the present disclosure, FIG. 5 is a flowchart showing a detailed flow of setting a risk level in a method according to an embodiment of the present disclosure, and FIG. 6 is a flowchart showing a detailed flow of determining whether a recognized safety device is a safety device for which a risk has been released, in a method according to an embodiment of the present disclosure.

Referring to FIGS. 4 through 6, the method according to an embodiment of the present disclosure is a method of setting a risk level of an object detected in a predetermined area around construction equipment at a construction site, and may be performed by the aforementioned construction equipment safety system 10.

First, the sensing unit 100 senses a predetermined area around the construction equipment 1 in real time (S100), and the control unit 200 may receive the sensing result and detect an object present in the predetermined area (S200).

The detection of the object may be performed by a pre-trained artificial intelligence neural network configured to detect an object present in the predetermined area. Since this has been mentioned in the description of the construction equipment safety system 10 according to an embodiment of the present disclosure, a description of the overlapping content is omitted.

Thereafter, the control unit 200 may determine whether the detected object is a safety device provided at a construction site so that the construction equipment 1 works safely, and may set a risk level for the safety device (S300).

Specifically, in the setting of the risk level for the safety device (S300), whether the detected object is a safety device may be determined (S310). When the detected object is not a safety device, the risk for the corresponding object is not released, and a collision risk warning may be displayed (S360). In this case, preferably, before displaying the collision risk warning, determining whether a distance between the construction equipment 1 and the detected object is equal to or less than a threshold value may be carried out first.

When the detected object is a safety device, whether it is a safety device for which risk release has been previously set may be determined (S320).

In order to determine whether it is a safety device for which risk release has been previously set, whether a risk release record for a safety device of the same kind as the detected safety device exists may be determined (S321). The risk release record may be recorded in the storage unit 400.

When the risk release record exists, the time t1_2 at which the safety device is detected may be compared with the time stamp t1_1 preset for the safety device for which the risk release is recorded (S322). In this case, whether the time difference between t1_1 and t1_2 as a result of the comparison is smaller than the preset difference value is determined (S324), and when the time difference is smaller than the difference value, the later-detected safety device is determined to be the same safety device as the safety device for which risk release has been previously set, and for the corresponding safety device, a collision risk warning may be immediately turned off without inquiring whether to release the risk through a pop-up message (S330).

Preferably, before turning off the collision risk warning, the time stamp t1_1 of the safety device for which the risk release is recorded may be initialized (S325). The initialization of the time stamp t1_1 may mean resetting the time stamp to the time t1_2 at which the safety device is later detected. Together with the turning off of the collision risk warning, the risk release for the corresponding safety device and the reset time stamp t1_2 may be recorded in the storage unit 400.

Meanwhile, the preset difference value may be 60 sec.

Returning to step S324, when the time difference between t1_1 and t1_2 is equal to or greater than the preset difference value, the later-detected safety device is determined not to be the same safety device as the safety device for which risk release has been previously set, and a time stamp t2_1 may be set for the first time for the time at which the corresponding safety device is detected (S326). Thereafter, inquiring of the worker, through the interface unit 300 provided in the construction equipment, whether to release the risk with respect to the detected safety device may be carried out (S340).

Returning to step S321, when there is no risk release record for the detected safety device, a time stamp t1_1 may be set for the first time for the time at which the safety device is detected (S323). Thereafter, inquiring of the worker, through the interface unit 300 provided in the construction equipment, whether to release the risk with respect to the detected safety device may be carried out (S340).

The inquiry about the risk release may be carried out using a pop-up message as described with reference to FIGS. 3a through 3c. Since the details overlap with the above description, they are omitted.

In response to the inquiry about the risk release, when a user input approving the release of the risk of the detected safety device is received through the interface unit 200, a collision risk warning for the corresponding safety device may be turned off (S350, S330). In this case, together with the turning off of the collision risk warning, the risk release for the corresponding safety device and the initially set time stamp t1_1 may be recorded in the storage unit 400.

In response to the inquiry about the risk release, when a user input rejecting the release of the risk of the detected safety device is received through the interface unit 200, a collision risk warning for the corresponding object (safety device) may be displayed (S350, S360). In this case, preferably, before displaying the collision risk warning, determining whether a distance between the construction equipment 1 and the detected object is equal to or less than a threshold value may be carried out first.

As described above, according to an embodiment of the present disclosure, for a safety device detected at a construction site, by inquiring of a worker, through the interface unit, whether to release a risk and, simultaneously with receiving from the worker an input for setting the release of the risk, setting a warning for the safety device not to be displayed, it is possible to prevent a warning from continuously sounding for a safety device that has a low collision risk because the worker already knows its position, and work efficiency can be improved.

According to an embodiment of the present disclosure, by being configured to determine whether a detected safety device is a safety device for which a risk has been previously released, a risk-released state is maintained for a safety device for which a risk has been released, without the need to repeatedly select risk release, and the convenience of a worker can be improved.

The foregoing description of the present disclosure is for illustrative purposes, and a person of ordinary skill in the art to which the present disclosure pertains can understand that the present disclosure can be easily modified into other specific forms without changing the technical spirit or essential features of the present disclosure. Therefore, it is to be understood that the embodiments described above are illustrative in all aspects and not restrictive. For example, each component described as a single type may be implemented in a distributed manner, and likewise, components described as distributed may be implemented in a combined form.

The scope of the present disclosure is defined not by the above detailed description but by the claims set forth below, and it is to be construed that all changes or modified forms derived from the meaning and scope of the claims and their equivalents are included in the scope of the present disclosure.

## Claims

1. A construction equipment safety system comprising:
a sensing unit provided in construction equipment and configured to sense a predetermined area around the construction equipment;
a control unit configured to receive a sensing result from the sensing unit and to detect an object present in the predetermined area; and
an interface unit configured to receive information on the object detected by the control unit and to warn a worker aboard the construction equipment of a collision risk,
**characterized in that** the control unit determines whether the detected object is a safety device that is provided at a construction site so that the construction equipment works safely, and, when the detected object is the safety device, inquires of the worker, through the interface unit, whether to release a risk with respect to the safety device.

2. The construction equipment safety system of claim 1, wherein
the safety device comprises at least one of a signaler that controls operation of the construction equipment, a safety fence, or a traffic cone.

3. The construction equipment safety system of claim 1, wherein
the control unit comprises a processor that executes a pre-trained artificial intelligence neural network to detect the object present in the predetermined area.

4. The construction equipment safety system of claim 1, **characterized in that**
the control unit controls the interface unit to output a pop-up message to inquire whether to release the risk, and the pop-up message differs depending on a type of the safety device.

5. The construction equipment safety system of claim 1, **characterized in that**
the control unit receives, through the interface unit, a user input that sets whether to release the risk of the detected safety device.

6. The construction equipment safety system of claim 1, **characterized in that**
the control unit, upon receiving a user input approving release of the risk of the detected safety device, turns off a collision risk warning with respect to the safety device.

7. The construction equipment safety system of claim 1, **characterized in that**
the control unit, when the detected object is the safety device, determines whether the detected object is a safety device for which risk release has been previously set.

8. The construction equipment safety system of claim 7, **characterized in that**
the control unit, when it is determined that the detected object is a safety device for which risk release has been previously set, immediately turns off a collision risk warning with respect to the safety device without inquiring whether to release the risk.

9. A method of setting a risk level of an object detected in a predetermined area around construction equipment at a construction site, the method comprising:
detecting an object present in the predetermined area; and
determining whether the detected object is a safety device that is provided at the construction site so that the construction equipment works safely, and setting a risk level for the safety device,
**characterized in that** the setting of the risk level comprises inquiring of a worker, through an interface unit provided in the construction equipment, whether to release a risk with respect to the safety device.

10. The method of claim 9, wherein
the detecting of the object comprises executing a pre-trained artificial intelligence neural network to detect the object present in the predetermined area.

11. The method of claim 9, **characterized in that**
the setting of the risk level comprises, upon receiving through the interface unit a user input approving release of the risk of the detected safety device, turning off a collision risk warning with respect to the safety device.

12. The method of claim 9, **characterized in that**
the setting of the risk level comprises, when the detected object is the safety device, determining whether the detected object is a safety device for which risk release has been previously set.

13. The method of claim 12, **characterized in that**
the setting of the risk level comprises, when it is determined that the detected object is a safety device for which risk release has been previously set, immediately turning off a collision risk warning with respect to the safety device without inquiring whether to release the risk.
